# EUROPEAN PATENT APPLICATION

(11) **EP 4 265 808 A1**
(43) Date of publication of application: **25.10.2023**
(21) Application number: 21906975.4
(22) Date of filing: 09.12.2021
(51) Int. Cl.: C23C 2/06, C23C 2/02, C23C 2/28, C23C 2/40, C22C 38/02, C22C 38/04, C22C 38/06, C21D 8/02

(54) **HIGH STRENGTH HOT-DIP GALVANIZED STEEL SHEET HAVING EXCELLENT COATABILITY AND METHOD OF MANUFACTURING SAME**

(30) Priority: 18.12.2020 KR 20200178318
(71) Applicant: POSCO Co., Ltd, Pohang-si, Gyeongsangbuk-do 37859 (KR)
(72) Inventor: KIM, Young-Ha, Gwangyang-si, Jeollanam-do 57807 (KR); LEE, Suk-Kyu, Gwangyang-si, Jeollanam-do 57807 (KR); HAN, Tae-Kyo, Gwangyang-si, Jeollanam-do 57807 (KR); KANG, Dae-Young, Gwangyang-si, Jeollanam-do 57807 (KR)
(74) Representative: Meissner Bolte Partnerschaft mbB
(86) International application number: PCT/KR2021/018616
(87) International publication number: WO 2022/131671

(57) **Abstract**

One embodiment of the present invention provides a high-strength hot-dip galvanized steel sheet having excellent coatability and a manufacturing method therefor, the hot-dip galvanized steel sheet having a base steel sheet and a hot-dip galvanized layer formed on one or both surfaces of the base steel sheet, wherein the base steel sheet comprises an internal oxide layer comprising, by weight%, carbon (C): 0.1% to 0.3%, silicon (Si): 0.1% to 2.0%, aluminum (Al): 0.1% to 1.5%, manganese (Mn): 1.5% to 3.0%, and the balance being Fe and unavoidable impurities, wherein the sum of Si and Al satisfies 1.2% to 3.5%, the ratio of Al and Si (Al/Si) satisfies 0.5 to 2.0, the surface roughness (Ra) of the base steel sheet is 0.5 µm or more, and the thickness directly under the surface of the base steel sheet is less than 4 µm.

## Description

### [Technical Field]

The present disclosure relates to a high-strength hot-dip galvanized steel sheet having excellent coatability and a method of manufacturing the same.

### [Background Art]

With recently emerging environmental regulations, the demand for ultra-high-strength steel sheets is rapidly increasing as a way to cope with strengthening of stringent automobile fuel efficiency regulations and crash safety regulations. In addition, fuel efficiency improvement is required to achieve carbon emission reduction targets by country, while a vehicle weight is continuously increasing due to the increase in high performance and various convenience devices. In order to solve these problems, demand for ultra-high strength steel sheet is continuously increasing. Accordingly, steelmakers are concentrating on developing high-strength steel sheets such as dual phase (DP) steel, transformation induced plasticity (TRIP) steel, and complex phase (CP) steel.

In order to increase the strength of automotive steel sheets, it is common to add a large amount of elements such as Si, Mn, and Al to steel. However, as a steel sheet containing these elements has oxides generated on a surface of the steel sheet during a annealing heat treatment process, when the steel sheet is immersed in a hot-dip galvanizing bath, coatability may deteriorate and coating peeling may occur. In addition, during the subsequent spot welding process, liquid metal embrittlement occurs in which liquid molten metal penetrates into a base metal grain boundary to cause cracks, resulting in poor spot weldability.

In order to improve coatability of a steel sheet with a large amount of Si, Mn, and Al added, it is necessary to inhibit the oxides generated on the surface of the steel sheet. To this end, the amount of Si and Al added in the steel should be reduced. In this case, there is a problem in securing a targeted material.

A representative technique for solving this problem is disclosed in Patent Document 1. Patent Document 1 relates to a technology of inhibiting the formation of Si oxide or the like on the surface by preferentially concentrating at the grain boundary through the addition of trace components such as Sb in steel.

However, there is still a need for the development of a technology capable of more reliably preventing diffusion of alloy elements in steel when manufacturing a steel sheet.

### [Related Art Document]

(Patent Document 1) Japanese Patent Publication No. 6222040

### [Disclosure]

### [Technical Problem]

The present disclosure provides a high-strength hot-dip galvanized steel sheet having excellent coatability and a method of manufacturing the same.

### [Technical Solution]

In an aspect in the present disclosure, a high-strength hot-dip galvanized steel sheet having excellent coatability includes a base steel sheet and a hot-dip galvanized layer formed on one or both surfaces of the base steel sheet, in which the base steel sheet includes an internal oxide layer containing, by weight%, carbon (C): 0.1% to 0.3%, silicon (Si): 0.1% to 2.0%, aluminum (Al): 0.1% to 1.5%, manganese (Mn): 1.5% to 3.0%, and the balance being Fe and unavoidable impurities, a sum of Si and Al satisfies 1.2% to 3.5%, a ratio of Al and Si (Al/Si) satisfies 0.5 to 2.0, a surface roughness (Ra) of the base steel sheet is 0.5 or more, and a thickness directly under the surface of the base steel sheet is less than 4 µm.

In another aspect in the present disclosure, a method of manufacturing a high-strength hot-dip galvanized steel sheet having excellent coatability includes: reheating, 1000 to 1300°C, a slab containing, by weight%, carbon (C): 0.1% to 0.3%, silicon (Si): 0.1% to 2.0%, aluminum (Al): 0.1% to 1.5%, manganese (Mn): 1.5% to 3.0%, and balance being Fe and unavoidable impurities, a sum of Si and Al satisfying 1.2% or more and a ratio of Al and Si (Al/Si) satisfying 0.5 to 2.0; obtaining a hot-rolled steel sheet by hot finishing rolling the reheated slab at 800 to 950°C; winding the hot-rolled steel sheet at 630 to 700°C; pickling the wound hot-rolled steel sheet for more than 30 seconds and less than 60 seconds; obtaining a cold-rolled steel sheet by cold rolling, annealing, and cooling the pickled hot-rolled steel sheet; and hot-dip galvanizing the cold-rolled steel sheet.

### [Advantageous Effects]

As set forth above, according to an aspect of the present disclosure, it is possible to provide a high-strength hot-dip galvanized steel sheet having excellent coatability and a method of manufacturing the same.

### [Brief Description of the Drawings]

FIG. 1 is a surface image of Inventive Example 1 according to an embodiment of the present disclosure.
FIG. 2 is a surface image of Comparative Example 4 according to an embodiment of the present disclosure.
FIG. 3 is an image of a cross-section of a cold-rolled steel sheet of Inventive Example 1 according to an embodiment of the present disclosure observed with a scanning electron microscope (SEM).
FIG. 4 is an image of a cross-section of a cold-rolled steel sheet of Comparative Example 4 according to an embodiment of the present disclosure observed with a scanning electron microscope (SEM).

### [Best Mode]

Hereinafter, a high-strength hot-dip galvanized steel sheet having excellent coatability according to an embodiment of the present disclosure will be described. The hot-dip galvanized steel sheet of the present disclosure has a base steel sheet and a hot-dip galvanized layer formed on one or both sides of the base steel sheet. First, the alloy composition of the base steel sheet of the present disclosure will be described in detail. The content of the alloy composition described below refers to weight% unless otherwise specified.

### Carbon (C): 0.1 to 0.3%

C is an element contributing to the stabilization of the austenite structure, and is advantageous in securing the austenite structure as its content increases. In order to obtain the above effect, the content of C is preferably 0.1% or more. However, when the content of C exceeds 0.3%, there is a problem that cast steel defects may occur and weldability is also deteriorated. Therefore, the content of C preferably ranges from 0.1 to 0.3%. The lower limit of the content of C is more preferably 0.15%. The upper limit of the content of C is more preferably 0.25%.

### Silicon (Si): 0.1 to 2.0%

Silicon (Si) is an element contributing to stabilization of retained austenite by inhibiting precipitation of carbides in ferrite and inhibiting diffusion of carbon in ferrite to austenite. In order to obtain the above-described effect, it is preferable to add 0.1% or more of Si, but when the content exceeds 2.0%, not only the rollability is inferior, but also the oxide is formed on the surface of the steel sheet during the heat treatment process, resulting in poor coatability and adhesion. Therefore, the content of Si preferably ranges from 0.1 to 2.0%. The lower limit of the content of Si is more preferably 0.2%. The upper limit of the content of Si is more preferably 1.8%.

### Aluminum (Al): 0.1 to 1.5%

Aluminum (Al) is an element that deoxidizes by combining with oxygen in steel, and, like Si, Al is an element contributing to the stabilization of retained austenite by inhibiting the formation of carbides in ferrite. In order to obtain the above-mentioned effect, it is preferable to add 0.1% or more of Al, but when the content thereof exceeds 1.5%, the robustness of the slab deteriorates, and since the AL is an element with a strong oxygen affinity, oxides may form on the surface of the steel sheet, resulting in poor coatability and adhesion. Therefore, the content of Al preferably ranges from 0.1 to 1.5%. The lower limit of the content of Al is more preferably 0.2%. The upper limit of the content of Al is more preferably 1.4%.

### Manganese (Mn): 1.5 to 3.0%

The Mn is an element that stabilizes the austenite structure together with carbon. When the content of Mn is less than 1.5%, it becomes difficult to secure the target strength due to the occurrence of ferrite transformation, and when the content of Mn exceeds 3.0%, it is difficult to secure the target ductility due to the formation of martensite caused by a phase transformation delay during a secondary annealing heat treatment process. Therefore, the content of Mn preferably ranges from 1.5 to 3.0%. The lower limit of the content of Mn is more preferably 1.7%. The upper limit of the content of Mn is more preferably 2.9%.

In addition to the steel composition described above, the remainder may include Fe and unavoidable impurities. The unavoidable impurities may be unintentionally incorporated during the normal steel manufacturing process, and may not be completely excluded, and technicians in the normal steel manufacturing field may easily understand their meaning. Further, the present disclosure does not entirely exclude the addition of other compositions than the steel composition described above.

Meanwhile, as described above, both Si and Al are elements contributing to the stabilization of retained austenite, and in order to effectively achieve this, it is preferable that the sum of the content of Si and Al satisfies the range of 1.2 to 3.5%. When the sum of the content of Si and Al is less than 1.2%, it may be difficult to sufficiently obtain the effect of increasing elongation. On the other hand, when the sum of the content of Si and Al exceeds 3.5%, the castability and rollability may deteriorate. It is more preferable that the lower limit of the sum of the content of Si and Al is 1.3%. It is more preferable that the upper limit of the sum of the content of Si and Al is 3.4%.

In addition, the ratio of Al and Si (Al/Si) preferably satisfies 0.5 to 2.0. When the ratio of Al and Si is less than 0.5, spot welding liquid metal embrittlement sensitivity may increase due to matrixization of the Si base, resulting in poor weldability. On the other hand, when the ratio of Al and Si exceeds 2.0, the oxygen affinity is relatively high due to the matrixization of the Al base, which facilitates the formation of oxides on the surface of the steel sheet, resulting in poor coatability and adhesion. The lower limit of the ratio of Al and Si is more preferably 0.6. The upper limit of the ratio of Al and Si is more preferably 1.9.

In the hot-dip galvanized steel sheet of the present disclosure, the surface roughness (Ra) of the base steel sheet is preferably 0.5 um or more. In this way, by imparting the surface roughness to the base steel sheet, the adhesion between the hot-dip galvanized layer and the base steel sheet may be secured by an anchoring effect. In order to obtain the above effect, it is preferable that the surface roughness (Ra) of the base steel sheet is 0.5 um or more. The surface roughness (Ra) of the base steel sheet is more preferably 0.7 or more. Meanwhile, in the present disclosure, since the larger the surface roughness of the base steel sheet, the more advantageous it is to secure the above-described effect, the upper limit is not particularly limited. However, due to the limitations in the manufacturing process, the surface roughness of the base steel sheet may be difficult to exceed 2 µm.

The hot-dip galvanized steel sheet of the present disclosure preferably includes an internal oxide layer having a thickness of less than 4 um directly under the surface of the base steel sheet. One feature of the present disclosure is to improve the coatability by forming the internal oxide layer directly under the surface of the base steel sheet to prevent the Al or Si present in the base steel sheet from diffusing to the surface layer portion of the steel sheet and prevent the Al or Si oxide from being formed on the surface layer portion. However, when the thickness of the internal oxide layer is 4 um or more, there is a disadvantage in that the oxides on the surface of the steel sheet are picked up on the roll during the annealing heat treatment process, resulting in surface defects such as dents. Therefore, the thickness of the internal oxide layer is preferably less than 4 um. The thickness of the internal oxide layer is more preferably 3.5 um or less.

The inner oxide layer includes oxide having a maximum length of less than 4 µm. When the maximum length of the oxide is 4 um or more, there is a disadvantage in that the oxides on the surface of the steel sheet are picked up on the roll during the annealing heat treatment process, resulting in surface defects such as dents. Therefore, the maximum length of the oxide is preferably less than 4 um. The maximum length of the oxide is more preferably 3.5 um or less.

The oxide may be formed of the Al and Si composite oxide. In this way, by allowing the oxide to form the Al and Si composite oxide, the oxide is formed in an intermittent form rather than a continuous form such as a layer, so it is possible to improve the coating adhesion.

The Al and Si composite oxide may present both within crystal grains or at the grain boundary, but is relatively mainly present at the grain boundary. In this case, it is preferable that the Al and Si composite oxide is intermittently present at the grain boundary. In this way, by allowing the Al and Si composite oxide to exist intermittently at the grain boundary, it may be advantageous to secure the coating adhesion compared to continuously existing. More preferably, among the Al included in the Al and Si composite oxide, the Al present at the grain boundary has a spacing of 20 nm or more. When the spacing of Al present at the grain boundary is less than 20 nm, it may be difficult to secure the coating adhesion. It is more preferable that the spacing of Al present at the grain boundary is 30 nm or more.

The hot-dip galvanized steel sheet of the present disclosure provided as described above has a yield strength of 600 MPa or more, a tensile strength of 950 MPa or more, and an elongation of 20% or more, so it is possible to secure excellent mechanical properties In addition, the area of the hot-dip galvanized layer compared to the total area of the base steel sheet is 95% or more, and the coating adhesion is good, so the hot-dip galvanized layer may have excellent coatability. In addition, since the LME crack does not occur, the hot-dip galvanized layer may have excellent LME crack resistance.

Hereinafter, a method of manufacturing high-strength hot-dip galvanized steel sheet having excellent coatability according to an embodiment of the present disclosure will be described.

First, a slab satisfying the above-described alloy composition is reheated at 1000 to 1300°C. When the slab reheating temperature is less than 1000°C, a problem may occur in which the rolling load significantly increases, and when the slab reheating temperature exceeds 1300°C, a problem may occur in which the surface scale is excessive. Therefore, the slab reheating temperature preferably ranges from 1000 to 1300°C. The lower limit of the slab reheating temperature is more preferably 1050°C. The upper limit of the slab reheating temperature is more preferably 1250°C.

Thereafter, the reheated slab is hot finished rolled at 800 to 950°C to obtain the hot-rolled steel sheet. When the hot finish rolling temperature is less than 800°C, the rolling load increases, which makes rolling difficult, and when the hot finish rolling temperature exceeds 950°C, the roll life is shortened due to the increase in thermal fatigue of the rolling rolls. Therefore, the hot finish rolling temperature preferably ranges from 800 to 950°C. The lower limit of the hot finishing rolling temperature is more preferably 830°C. The upper limit of the hot finishing rolling temperature is more preferably 930°C.

Thereafter, the hot-rolled steel sheet is wound at 630 to 700°C. When the winding temperature is less than 630°C, the formation of oxides on the surface layer portion of the steel sheet may be promoted during the annealing heat treatment process as the internal oxide layer is not formed, resulting in poor coatability, and when the winding temperature exceeds 700°C, since the depth of the inner oxide layer is considerably deep, oxide is picked up on the roll during the subsequent annealing heat treatment process, which may cause the surface defects such as dents. Therefore, the winding temperature preferably ranges from 630 to 700°C. The lower limit of the winding temperature is more preferably 650°C. The upper limit of the winding temperature is more preferably 680°C.

Therefore, the wound hot-rolled steel sheet is pickled for more than 30 seconds and less than 60 seconds. When the pickling time is 30 seconds or less, the hot-rolled scale is not completely removed, which may result in non-coating and coating peeling due to the retrained scale. On the other hand, when the pickling time is 60 seconds or more, since the pickling solution penetrates along the grain boundary of the internal oxide layer and removes the internal oxide layer, the internal oxide layer of the finally obtained steel sheet is completely removed, so the diffusion of alloy elements to the surface layer portion of the steel sheet may not be inhibited during the annealing heat treatment process, resulting in poor coatability and adhesion. In addition, when the pickling time is not satisfied, as the surface roughness (Ra) of the base steel sheet is less than 0.5 um and the smooth surface is obtained, it is difficult to expect the anchoring effect with the hot-dip galvanized layer in the subsequent coating process and it is difficult to secure the adhesion. Therefore, the pickling time preferably has a range of more than 30 seconds and less than 60 seconds. The lower limit of the pickling time is more preferably 35 seconds, and even more preferably 40 seconds. The upper limit of the pickling time is more preferably 55 seconds, and even more preferably 50 seconds.

Thereafter, the cold-rolled steel sheet is obtained by cold rolling, annealing, and cooling the pickled hot-rolled steel sheet. In the present disclosure, the cold rolling, annealing and cooling conditions are not particularly limited, and the conditions commonly performed in the art may be used.

Thereafter, the cooled cold-rolled steel sheet is hot-dip galvanized. In the present disclosure, the hot-dip galvanizing method is not particularly limited, and the conditions commonly used in the art may be used. However, for example, it may be done by immersing the cold-rolled steel sheet in the hot-dip galvanizing bath at 440 to 460°C. When the temperature of the hot-dip galvanizing bath is less than 440°C, the viscosity of the coating bath increases and the mobility of the roll winding the steel sheet decreases, resulting in the slip between the steel sheet and the roll and the defects in the steel sheet, and when the temperature of the hot-dip galvanizing bath exceeds 460°C, the phenomenon that the steel sheet is dissolved in the coating bath is promoted, and the generation of dross in the form of Fe-Zn compounds is accelerated, resulting in the surface defects.

Meanwhile, after the hot-dip galvanizing, the method may further include performing alloying heat treatment on the hot-dip galvanized steel sheet at 480 to 600°C. When the alloying heat treatment temperature is less than 480°C, Fe in the base material may not sufficiently diffuse into the coating layer, so the Fe content in the coating layer may not be sufficiently secured, and when the alloying heat treatment exceeds 600°C, the content of Fe in the coating layer is excessive, a powdering phenomenon may occur in which the coating layer is removed during the processing of the steel sheet.

### [Mode for Invention]

Hereinafter, the present disclosure will be described in more detail with reference to Examples. However, the following examples are only examples for describing the present disclosure in more detail, and do not limit the scope of the present disclosure.

### (Example)

After molten metal having alloy compositions shown in Table 1 was prepared into an ingot having a width of 175 mm and a thickness of 90 mm in a vacuum melting furnace, the molten metal was subjected to homogenization treatment performed by reheating at 1200°C for 1 hour, and hot finish rolling at 900°C which is a temperature of Ar3 or higher, and then wound under the conditions shown in Table 2 below, to thereby manufacturing a hot-rolled steel sheet. The hot-rolled steel sheet was immersed in a 15% HCl pickling solution under the conditions shown in Table 2 and pickled. Thereafter, the cold-rolled steel sheets were manufactured by cold rolling at a cold rolling reduction rate of 50 to 60%. After the cold-rolled steel sheet was subjected to annealing heat treatment in a reducing furnace at 860°C by blowing nitrogen gas containing 5 vol% of hydrogen, cooled, immersed in a hot-dip galvanizing bath for 5 seconds, the coating adhesion amount was controlled to 60g/m² based on one side through air wiping, to thereby manufacture the hot-dip galvanized steel sheet.

For the hot-dip galvanized steel sheet manufactured as described above, mechanical properties, a roughness of the base steel sheet, a thickness of an internal oxide layer, a maximum length of oxide, a spacing of Al present at a grain boundary, coatability, and LME crack resistance were measured, and the results were shown in Tables 2 and 3 below. Meanwhile, the measured oxide was an Al and Si composite oxide.

For the mechanical properties, after the hot-dip galvanized steel sheet was cut into 40 mm × 200 mm in size in a vertical direction of a rolling direction, and a side surface thereof was milled and ground, a tensile specimen was prepared in accordance with JIS No. 5 standard, and yield strength (YS), tensile strength (TS), and elongation (EL) of the tensile specimen were measured with a tensile tester.

The surface roughness (Ra) of the base steel sheet, the thickness of the internal oxide layer, and the maximum length of the oxide were measured at 5000 magnification by randomly selecting 10 areas from the cross-sectional microstructure image obtained through a scanning electron microscope (SEM), and then the mean values were indicated.

Among the Al included in the Al and Si composite oxide, the spacing of Al present at the grain boundary was measured through component mapping using energy dispersive spectroscopy (EDS) through transmission electron microscopy (TEM).

The coatability was evaluated by measuring the formation area of the hot-dip galvanized layer compared to the total area of the hot-dip galvanized steel sheet by image analysis to measure the fraction, and by applying the structural adhesive on the hot-dip galvanized steel sheet, curing the structural adhesive at 175°C for 20 minutes, and then checking whether the adhesive came out on a sealer (coating adhesion) when bending at 90°.

The LME crack resistance was evaluated based on whether or not LME cracks occurred at an upper limit current after welding the hot-dip galvanized steel sheet. In this case, the welding was performed under the condition of flowing welding current using a Cu-Cr electrode with a tip diameter of 6 mm and 16 cycles of energization time and 15 cycles of holding time with a pressure of 2.6 kN. When the thickness of the steel sheet is t, the welding current when a nugget diameter becomes smaller than 4Vt is set as a lower limit current, and the welding current when the blowing phenomenon occurs is set as the upper limit current (expulsion current).

**[Table 1]**

| Steel type No. | Alloy composition (weight%) | | | | | |
|---|---|---|---|---|---|---|
| | C | Si | Al | Mn | Al+Si | Al/Si |
| Invent ive Steel 1 | 0.2 | 0.7 | 0.75 | 2.8 | 1.45 | 1.07 |
| Invent ive Steel 2 | 0.22 | 0.5 | 0.8 | 2.5 | 1.3 | 1.60 |
| Invent ive Steel 3 | 0.21 | 0.7 | 0.5 | 2.6 | 1.2 | 0.71 |
| Invent ive Steel 4 | 0.2 | 0.5 | 1 | 2.7 | 1.5 | 2.00 |
| Compar ative Steel 1 | 0.24 | 0.5 | 0.5 | 2.8 | 1 | 1.00 |
| Compar ative Steel 2 | 0.21 | 1 | 0.2 | 2.6 | 1.2 | 0.20 |
| Compar ative Steel 3 | 0.22 | 0.2 | 1 | 2.7 | 1.2 | 5.00 |
| Invent ive Steel 5 | 0.22 | 0.7 | 0.6 | 2.8 | 1.3 | 0.86 |
| Invent ive Steel 6 | 0.21 | 0.8 | 0.7 | 2.6 | 1.5 | 0.88 |

**[Table 2]**

| Division | Steel Type | Winding temperatu | Pickling time | Yield strength | Tensile strength | Elonga tion |
|---|---|---|---|---|---|---|
| | No. | re (°C) | (second) | (MPa) | (MPa) | (%) |
| Inventi ve Example 1 | Inventi ve Steel 1 | 682 | 33 | 765 | 1047 | 23.2 |
| Inventi ve Example 2 | Inventi ve Steel 2 | 633 | 39 | 612 | 1058 | 21.9 |
| Inventi ve Example 3 | Inventi ve Steel 3 | 644 | 38 | 660 | 1055 | 21.5 |
| Inventi ve Example 4 | Inventi ve Steel 4 | 675 | 34 | 778 | 1088 | 23.8 |
| Compara tive Example 1 | Compara tive Steel 1 | 631 | 42 | 512 | 966 | 18.9 |
| Compara tive Example 2 | Compara tive Steel 2 | 638 | 45 | 665 | 1060 | 21.3 |
| Compara tive Example 3 | Compara tive Steel 3 | 630 | 31 | 663 | 1059 | 21.8 |
| Compara tive Example 4 | Inventi ve Steel 5 | 501 | 49 | 614 | 1062 | 21.7 |
| Compara tive Example 5 | Inventi ve Steel 6 | 641 | 130 | 769 | 1055 | 23.0 |

**[Table 3]**

| Divisi on | Steel type No. | Surface roughne ss of base steel sheet (Ra) (µm ) | Thickne ss of interna l oxidati on layer (µm) | Maximum length of oxide (µm) | Spacing of Al present at grain boundary (nm) | Coatability | | Wheth er LME crack occur s |
|---|---|---|---|---|---|---|---|---|
| | | | | | | Area fracti on of coatin g layer (%) | Coati ng adhes ion | |
| Invent ive Exampl e 1 | Inven tive Steel 1 | 0.9 | 3.1 | 3.8 | 26 | 95 | Non-peeling | Non-crack |
| Invent ive Exampl e 2 | Inven tive Steel 2 | 0.5 | 2.2 | 2.4 | 28 | 97 | Non-peeli ng | Non-crack |
| Invent ive Exampl e 3 | Inven tive Steel 3 | 0.6 | 2.5 | 2.9 | 21 | 98 | Non-peeli ng | Non-crack |
| Invent ive Exampl e 4 | Inven tive Steel 4 | 0.8 | 3.5 | 3.6 | 34 | 96 | Non-peeli ng | Non-crack |
| Compar ative Exampl e 1 | Compa rativ e Steel 1 | 0.5 | 1.6 | 2.2 | 22 | 99 | Non-peeli ng | Non-crack |
| Compar ative Exampl e 2 | Compa rativ e Steel 2 | 0.6 | 1.2 | 2.8 | 8 | 98 | Non-peeli ng | Crack |
| Compar ative Exampl e 3 | Compa rativ e Steel 3 | 0.5 | 0.2 | 0.5 | 35 | 88 | Non-peeli ng | Non-crack |
| Compar ative Exampl e 4 | Inven tive Steel 5 | 0.1 | - | - | 23 | 85 | Peeli ng | Non-crack |
| Compar ative Exampl e 5 | Inven tive Steel 6 | 0.2 | - | - | 24 | 92 | Peeli ng | Non-crack |

As can be seen from Tables 1 to 3 above, in the case of Inventive Examples 1 to 4 satisfying the alloy composition and manufacturing conditions proposed by the present disclosure, it could be seen that it has excellent coatability and LME crack resistance by securing the conditions of the surface roughness of the base steel sheet, the thickness of the internal oxide layer, the maximum length of the oxide, and the spacing of Al present at the grain boundary, which are to be obtained by the present disclosure.

On the other hand, as Comparative Example 1 does not satisfy the sum of Si and Al proposed by the present disclosure, it could be seen that the elongation is at a low level.

As Comparative Example 2 has a lower level than the ratio of Al and Si proposed by the present disclosure, it could be seen that the LME crack occurred.

As Comparative Example 3 has the ratio of Al and Si exceeding the ratio of Al and Si proposed by the present disclosure, it could be seen that a large amount of non-coating occurred and the coating quality was poor.

As Comparative Example 4 does not satisfy the winding temperature proposed by the present disclosure, it could be seen that the internal oxide layer was not formed, resulting in non-coating and poor coating adhesion.

As Comparative Example 5 does not satisfy the pickling temperature proposed by the present disclosure, it could be seen that the internal oxide layer was not formed, resulting in non-coating and poor coating adhesion.

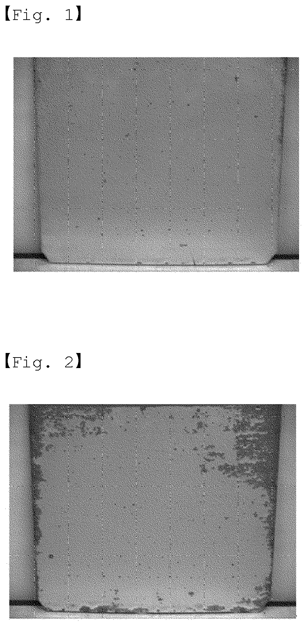

FIG. 1 is a surface image of Inventive Example 1, and FIG. 2 is a surface image of Comparative Example 4. As can be seen from FIGS. 1 and 2, Inventive Example 1 has almost no non-coated area and has good coating quality, whereas Comparative Example 4 has many non-coated area and has poor coating quality.

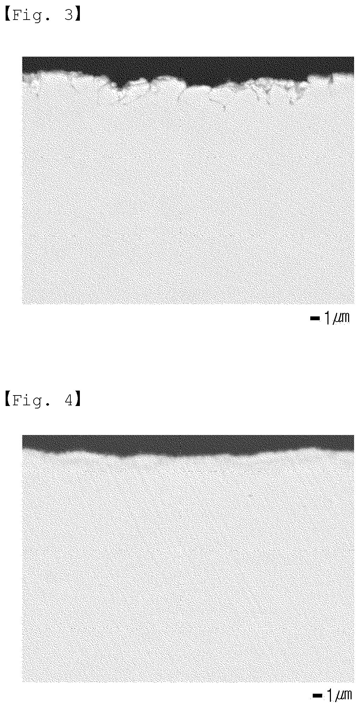

FIG. 3 is an image of a cross section of the cold-rolled steel sheet of Inventive Example 1 observed with a scanning electron microscope (SEM), and FIG. 4 is an image of a cross section of the cold-rolled steel sheet of Comparative Example 3 observed with the scanning electron microscope (SEM). As can be seen from FIGS. 3 and 4, Inventive Example 1 has an appropriate surface roughness formed on the base steel sheet and an internal oxide layer formed at an appropriate thickness, whereas in Comparative Example 4, it could be confirmed that the surface roughness of the base steel sheet is very low, but also an internal oxide layer is not formed.

## Claims

1. A high-strength hot-dip galvanized steel sheet having excellent coatability comprising:
a base steel sheet; and
a hot-dip galvanized layer formed on one or both surfaces of the base steel sheet,
wherein the base steel sheet includes an internal oxide layer containing, by weight%, carbon (C): 0.1% to 0.3%, silicon (Si): 0.1% to 2.0%, aluminum (Al): 0.1% to 1.5%, manganese (Mn): 1.5% to 3.0%, and balance being Fe and unavoidable impurities, a sum of Si and Al satisfies 1.2% to 3.5%, a ratio of Al and Si (Al/Si) satisfies 0.5 to 2.0,
a surface roughness (Ra) of the base steel sheet is 0.5 or more, and
a thickness directly under the surface of the base steel sheet is less than 4 µm.

2. The high-strength hot-dip galvanized steel sheet of claim 1, wherein the inner oxide layer includes oxide having a maximum length of less than 4 µm.

3. The high-strength hot-dip galvanized steel sheet of claim 2, wherein the oxide is formed of an Al and Si composite oxide.

4. The high-strength hot-dip galvanized steel sheet of claim 3, wherein the Al and Si composite oxide intermittently exists at a grain boundary.

5. The high-strength hot-dip galvanized steel sheet of claim 4, wherein, among the Al included in the Al and Si composite oxide, Al present at the grain boundary has a spacing of 20 nm or more.

6. The high-strength hot-dip galvanized steel sheet of claim 1, wherein the hot-dip galvanized steel sheet has a yield strength of 600 MPa or more, a tensile strength of 950 MPa or more, and an elongation of 20% or more.

7. The high-strength hot-dip galvanized steel sheet of claim 1, wherein, in the hot-dip galvanized steel sheet, an area of the hot-dip galvanized layer compared to a total area of the base steel sheet is 95% or more.

8. A method of manufacturing a high-strength hot-dip galvanized steel sheet having excellent coatability, the method comprising:
reheating, at 1000 to 1300°C, a slab containing, by weight%, carbon (C): 0.1% to 0.3%, silicon (Si): 0.1% to 2.0%, aluminum (Al): 0.1% to 1.5%, manganese (Mn): 1.5% to 3.0%, and balance being Fe and unavoidable impurities, a sum of Si and Al satisfying 1.2% or more and a ratio of Al and Si (Al/Si) satisfying 0.5 to 2.0;
obtaining a hot-rolled steel sheet by hot finishing rolling the reheated slab at 800 to 950°C;
winding the hot-rolled steel sheet at 630 to 700°C;
pickling the wound hot-rolled steel sheet for more than 30 seconds and less than 60 seconds;
obtaining a cold-rolled steel sheet by cold rolling, annealing, and cooling the pickled hot-rolled steel sheet; and
hot-dip galvanizing the cold-rolled steel sheet.

9. The method of claim 8, wherein the hot-dip galvanizing includes immersing the cold-rolled steel sheet in a hot-dip galvanizing bath at 440 to 460°C.

10. The method of claim 8, further comprising:
after the hot-dip galvanizing, performing alloying heat treatment on the hot-dip galvanized cold-rolled steel sheet at 480 to 600°C.
